# EUROPÄISCHE PATENTANMELDUNG

(11) **EP 2 000 360 A1**
(43) Veröffentlichungstag der Anmeldung: **10.12.2008**
(21) Anmeldenummer: 08009914.6
(22) Anmeldetag: 30.05.2008
(51) Int. Cl.: B60Q 11/00, H05B 33/08

(54) **Anhängeranschlussgerät**

(30) Priorität: 01.06.2007 DE 202007007776 U
(71) Anmelder: ConWys AG, 6023 Rothenburg (CH)
(72) Erfinder: Wystrou, Alexander, 6005 Luzern (CH)
(74) Vertreter: Stenger, Watzke & Ring

(57) **Zusammenfassung**

Die vorliegende Erfindung betrifft ein Anhängeranschlußgerät für einen Fahrzeugzug mit einem Zugfahrzeug und einem Anhänger. Ferner betrifft die Erfindung ein Verfahren zum Betreiben und Überwachen einer Leuchtdiode eines Anhängers. Um ein gattungsgemäßes Anhängeranschlußgerät für die Überwachung von Leuchtdioden zu ertüchtigen, wird mit der Erfindung ein gattungsgemäßes Anhängeranschlußgerät mit einem für eine Ansteuerung einer Leuchtdiode des Anhängers geeigneten Halbleiterschalter vorgeschlagen, der mittels einer Steuereinrichtung schaltbar ist, wobei die Steuereinrichtung mit einem steuereinrichtungenverbindenden Datennetz des Zugfahrzeuges in kommunikationstechnischer Verbindung steht, wobei ein resistives Element in der elektrischen Verbindung zwischen dem Halbleiterschalter und der Leuchtdiode angeordnet ist, welches elektrisch mit einem Stromspiegel gekoppelt ist.

## Beschreibung

Die vorliegende Erfindung betrifft ein Anhängeranschlußgerät für einen Fahrzeugzug mit einem Zugfahrzeug und einem Anhänger. Ferner betrifft die Erfindung ein Verfahren zum Betreiben und Überwachen einer Leuchtdiode eines Anhängers.

Fahrzeuge für den Straßenverkehr bestehen teilweise aus einem Fahrzeugzug, der ein Zugfahrzeug sowie einen oder mehrere Anhänger aufweist. Zugfahrzeuge können beispielsweise Personenkraftwagen, Lastkraftwagen oder dergleichen sein. Im Sinne der Erfindung kann ein Zugfahrzeug darüber hinaus auch ein von einem Zugfahrzeug gezogener Anhänger sein, an dem ein weiterer Anhänger angekoppelt ist. Anhänger im Sinne der Erfindung sind Fahrzeuge, die während eines Fahrzustands nicht aktiv angetrieben sondern gezogen werden. Sie können demnach auch in Schlepp genommene Fahrzeuge umfassen, die einen eigenen Antrieb aufweisen. Darüber hinaus sind Anhänger beispielsweise solche mit einer eigenen Deichsel oder auch Auflieger, insbesondere Fahrradauflieger, oder dergleichen. Diese können über Kupplungsmittel mit einem Zugfahrzeug gekoppelt werden, um den Fahrzeugzug zu bilden.

Gesetzlich vorgeschrieben ist unter anderem eine ordnungsgemäße Beleuchtung des Anhängers, was beispielsweise einen bestimmungsgemäßen Betrieb von Rücklichtern, Blinklichtern, Bremslichtern und dergleichen umfaßt. Bislang sind die Anhänger hierfür mit Glühlampen versehen, die die entsprechende Beleuchtung ermöglichen. Zum Betrieb dieser Lampen ist oftmals ein Anhängeranschlußgerät vorgesehen, welches die Lampen vorgabegemäß durch ein Signal des Zugfahrzeugs ansteuert. Das Anhängeranschlußgerät kann beispielsweise im Zugfahrzeug oder im Anhänger selbst angeordnet sein. Häufig ist dieses Anhängeranschlußgerät im Zugfahrzeug angeordnet, wobei dessen anhängerseitigen Anschlüsse zunächst auf eine Steckkupplung einer Steckverbindung geführt sind, die mit einem entsprechenden Gegenelement der Steckverbindung, nämlich einem Stecker, koppelbar ist. Das Anhängeranschlußgerät der gattungsgemäßen Art ist ferner in kommunikationstechnischer Verbindung mit einem Datennetz des Zugfahrzeugs, und empfängt hierüber die entsprechenden Steuerbefehle. Das Datennetz kann einen BUS umfassen, wie beispielsweise ein CAN-BUS oder dergleichen. Darüber hinaus können Meldungen vom Anhängeranschlußgerät an das zugfahrzeugseitige Datennetz übermittelt werden. Diese Meldungen können beispielsweise in Störmeldungen, Funktionsmeldungen, Selbsttests und dergleichen bestehen.

Die bekannten Anhängeranschlußgeräte liefern eine Vielzahl von Möglichkeiten zur Sicherstellung eines ordnungsgemäßen Betriebs der Anhängerglühlampen, um beispielsweise Defekte und Störungen erkennen und melden zu können. Bekannte Verfahren zum Überwachen der Glühlampen nutzen hierfür beispielsweise den Stromverbrauch im eingeschalteten Zustand oder den Stromverbrauch eines Spannungsimpulses im ausgeschalteten Zustand. Auf diese Weise kann die Glühlampe sowohl im eingeschalteten als auch im ausgeschalteten Zustand überwacht werden.

Moderne Anhänger werden zukünftig mit Leuchtdioden beziehungsweise entsprechenden lichtemittierenden Halbleitern ausgerüstet werden. Diese sollen die bisher bei Anhängern üblichen Glühlampen ersetzen. Die Leuchtdioden können beispielsweise durch einzelne Leuchtdioden, Leuchtdioden-Anordnungen (Arrays), die aus einer Zusammenschaltung von mehreren einzelnen Leuchtdioden bestehen, sowie auch durch andere lichtemittierende Halbleiter wie SLD's oder dergleichen gebildet sein. Die Leuchtdioden-Anordnung kann beispielsweise eine Parallelschaltung beziehungsweise Serienschaltung von einzelnen Leuchtdioden umfassen. Natürlich können einzelne Leuchtdioden auch matrixartig zusammengeschaltet sein, so dass eine Parallelschaltung mit einer Serienschaltung kombiniert ist.

Bei Verwendung von Leuchtdioden bei Anhängerleuchten besteht nunmehr das Problem, dass vorhandene Anhängeranschlußgeräte zu deren Ansteuerung ungeeignet sind. Dies resultiert zum einen aus unterschiedlichen Anforderungen hinsichtlich der Betriebsspannung sowie auch unterschiedlichen Anforderungen hinsichtlich des Stromverbrauchs. In der Regel verbrauchen lichtemittierende Halbleiter wie Leuchtdioden erheblich weniger elektrische Energie wie vergleichbar leuchtstarke Glühlampen. Aus diesem Grund sind für Leuchtdioden beziehungsweise lichtemittierende Halbleiter geeignete Anhängeranschlußgeräte erforderlich.

Die bisher bei Glühlampen bekannten Überwachungseinrichtungen der Anhängeranschlußgeräte können nicht zum Einsatz kommen. Dies basiert auf dem unterschiedlichen physikalischen Verhalten dieser Leuchtmittel gegenüber Glühlampen. Ein anderes Überwachungskonzept ist erforderlich.

Der Erfindung liegt deshalb die Aufgabe zugrunde, ein gattungsgemäßes Anhängeranschlußgerät für die Überwachung von Leuchtdioden zu ertüchtigen.

Als Lösung wird mit der Erfindung ein gattungsgemäßes Anhängeranschlußgerät mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeuges in kommunikationstechnischer Verbindung steht, wobei ein resistives Element in der elektrischen Verbindung zwischen dem Halbleiterschalter und der Leuchtdiode angeordnet ist, welches elektrisch mit einem Stromspiegel gekoppelt ist.

Mit dem Halbleiterschalter kann die Leuchtdiode in bekannter Weise ein- beziehungsweise ausgeschaltet werden. Dazu wird der Halbleiterschalter von der Steuereinrichtung entsprechend angesteuert. Diese erhält Steuerbefehle über das Datennetz des Zugfahrzeugs beziehungsweise des Anhängers, welches vorliegend als BUS, insbesondere als CAN-BUS, ausgebildet sein kann. Der Halbleiterschalter kann beispielsweise einen Transistor, insbesondere ein bipolarer Transistor, ein Feldeffekttransistor, vorzugsweise ein MOSFET, oder auch ein Tyristor, ein GTO oder dergleichen sein. Zur Überwachung des eingeschalteten Zustands kann beispielsweise eine Strommeßeinheit verwendet werden, mit der ein Strom vom Halbleiterschalter zur Leuchtdiode erfaßt werden kann. Auf diese Weise kann der eingeschaltete Zustand der Leuchtdiode überwacht werden. Vorliegend ist die Strommeßeinheit durch ein resistives Element in Verbindung mit einem Stromspiegel gebildet. Das resistive Element kann ein zweipoliges elektronisches Bauelement wie ein Widerstand, ein NTC oder dergleichen sein. Ferner kann das resistive Bauelement durch eine Zusammenschaltung von zwei oder mehreren elektronischen Bauelementen gebildet sein. Es können auch Dioden, Zehnerdioden oder dergleichen zum Einsatz kommen. Das resistive Element kann auch einstellbar sein, so dass das Anhängeranschlußgerät an unterschiedliche Typen von Leuchtdioden angepaßt werden kann. Mit dem resistiven Element ist ein Stromspiegel verbunden, der es erlaubt, durch Erfassung von elektrischen Parametern am resistiven Element einen Strom durch dieses Element zu ermitteln. Auf diese Weise ist es möglich, mit hoher Genauigkeit den Strom der Leuchtdiode beziehungsweise Leuchtdioden-Anordnung zu erfassen.

Mit der Stromspiegeleinheit kann ein Zustandssignal erzeugt werden. Dieses Zustandssignal kann die ordnungsgemäße Funktion der Leuchtdiode betreffen. Vorzugsweise zeigt das Zustandssignal an, ob die Leuchtdiode während des bestimmungsgemäßen Betriebs die vorgegebenen Parameter einhält. So ist es möglich, auch Driftabweichungen zu erfassen, die zu unzulässigen Betriebszuständen führen können. Natürlich sind mit der Vorrichtung auch die bekannten Zustände des Kurzschlusses und der Unterbrechung zu überwachen.

Das Zustandssignal erlaubt es, mit einer einzigen Aussage den Zustand der Leuchtdiode hinsichtlich der vorgesehenen Funktion anzugeben.

Weiterhin kann das Zustandssignal an eine übergeordnete Steuereinrichtung des Fahrzeugs übermittelbar sein. Dies erlaubt es, beispielsweise im Zugfahrzeug Meldungen bezüglich der Funktion oder Störung der Leuchtdiode anzuzeigen. Die Sicherheit kann weiter verbessert werden.

Ferner kann das Anhängeranschlußgerät einen Pegelumsetzer für das Zustandssignal aufweisen. So kann beispielsweise vorgesehen sein, dass das Zustandssignal auf ein für die übergeordnete Steuerung geeigneten Pegel umgesetzt wird. Dies kann beispielsweise durch einen Spannungsteiler oder dergleichen realisiert werden.

Weiterhin wird vorgeschlagen, dass das Anhängeranschlußgerät eine Auswerteeinheit für das Zustandssignal aufweist. Die Auswerteeinheit kann das Zustandssignal auswerten und hieraus zusätzliche Steuerbedingungen beziehungsweise -befehle für den Halbleiterschalter erzeugen. Von Vorteil ist dies insbesondere für den Fall eines Kurzschlusses oder eines Überstroms, wobei mittels der Auswerteeinheit ein entsprechender Schutz des Halbleiterschalters erreicht werden kann.

Zur Erhöhung der Zuverlässigkeit der Funktion der Auswerteeinheit kann diese eine Filtereinheit aufweisen. Die Filtereinheit kann beispielsweise durch eine Kombination von passiven Bauelementen wie Widerständen, Kondensatoren, Spulen und dergleichen gebildet sein.

Weiterhin wird vorgeschlagen, dass mittels der Steuereinrichtung Impulse für das Schaltelement erzeugbar sind. Vorzugsweise sind solche Impulse nicht nur Impulse, die für den bestimmungsgemäßen Betrieb der Leuchtdiode auf den Halbleiterschalter aufgeschaltet werden, beispielsweise zum Einschalten beziehungsweise Ausschalten der Leuchtdiode, sondern auch Prüfimpulse, mit denen die Leuchtdiode hinsichtlich ihrer stimmungsgemäßen Funktion außerhalb des eingeschalteten Zustands getestet werden kann. Auf diese Weise kann eine Überwachung der Leuchtdiode auch im ausgeschalteten Zustand erreicht werden. Vorteilhaft sind die Impulse einstellbar, so dass bei Prüfimpulsen diese so bemessen werden können, dass durch die Leuchtdiode keine wahrnehmbare Leuchtwirkung erreicht wird.

Weiterhin kann vorgesehen sein, dass die Impulse automatisch anpaßbar sind. Hierdurch kann eine höhere Flexibilität bezüglich unterschiedlicher Leuchtdiodentypen erreicht werden, insbesondere wenn im Reparaturfall eine defekte Leuchtdiode durch eine neue ersetzt wird, die geringfügig abweichende Eigenschaften aufweist. Zur Detektion können geeignete Sensormittel vorgesehen sein, die von der Steuereinrichtung ausgewertet werden und mittels denen die automatische Anpassung erfolgen kann.

Vorzugsweise sind mit der Steuereinrichtung Impulse nur dann erzeugbar, wenn das Schaltelement durch eine übergeordnete Steuerung ausgeschaltet ist. Auf diese Weise kann eine Überprüfung der Leuchtdiode in einem sicher ausgeschalteten Zustand erreicht werden. Überlagerungen insbesondere bei Übergangszuständen mit den hierbei auftretenden Auswertungsproblemen können vermieden werden.

Weiterhin kann vorgesehen sein, dass die Auswerteeinheit mittels der Steuereinrichtung aktivierbar ist. Auf diese Weise muß die Auswerteeinheit nicht permanent in Betrieb gehalten werden, sondern kann gezielt nur dann aktiviert sein, wenn auch ein entsprechender Impuls zur Überwachung der Leuchtdiode ausgegeben wird. Unerwünschte Signale der Auswerteeinheit können vermieden werden.

In einer Weiterbildung wird vorgeschlagen, dass die elektrische Verbindung zwischen dem Gerät und der Leuchtdiode mittels eines mit einem Bezugspotential verbundenen Kondensators gepuffert ist. Diese Ausgestaltung erlaubt es, die Überwachung der Leuchtdiode mittels eines Prüfimpulses im ausgeschalteten Zustand weiter zu verbessern, da das Entstehen einer unerwünschten Leuchtwirkung an der Leuchtdiode durch den Kondensator zusätzlich gedämpft wird. Die Funktion der Überwachung kann weiter verbessert werden. Der Kondensator selbst kann im Gerät und/oder im Bereich der Leuchtdiode angeordnet sein. Besonders vorteilhaft erweist es sich, wenn der Kondensator durch zwei Kondensatoren gebildet ist, wobei jeweils einer am entsprechenden Anschluß des Gerätes und der zweite im Bereich der Leuchtdiode angeschlossen ist. Auf diese Weise können Störeinflüsse auf den Leitungen zusätzlich gedämpft werden. Ein verbessertes EMV-Verhalten kann erreicht werden.

In einer Weiterbildung wird vorgeschlagen, dass der Halbleiterschalter überlastfest ausgebildet ist. Überlastfest im Sinne der Erfindung bedeutet, dass der Halbleiterschalter nicht nur gegen Beanspruchung wegen Überstrom, insbesondere Kurzschluß, oder dergleichen, geschützt ist, sondern auch dass er gegen Übertemperatur geschützt ist. Vorzugsweise ist eine Sensorschaltung vorgesehen, die die Temperatur des Halbleiterschalters erfaßt und bei erreichen eines vorgebbaren Temperaturschwellwertes den Halbleiterschalter deaktiviert. Vorzugsweise erfolgt dann eine Meldung im Zugfahrzeug über eine Störung des Anhängeranschlußgerätes. Der Halbleiterschalter kann dazu beispielsweise Gegenkopplungsmittel aufweisen, mit denen die Belastung des Halbleiterschalters mit zunehmender Überlastung zurückgefahren wird. Natürlich kann auch vorgesehen sein, dass bei Erreichen einer Überlastschwelle der Halbleiterschalter permanent ausgeschaltet wird. Der Halbleiterschalter kann beispielsweise durch einen bipolaren Transistor gebildet sein, der an seinem Emitteranschluß mit einem Gegenkopplungswiderstand verbunden ist. Natürlich kommt auch ein Feldeffekttransistor, insbesondere ein MOSFET, in Frage, dessen Durchlaßwiderstand zugleich zur Erfassung des Stromes und der Temperatur verwendet werden kann. Eine besonders einfache Realisierung der Überlastfestigkeit kann erreicht werden.

Vorteilhaft ist das Anhängeranschlußgerät in einem Gehäuse angeordnet. Dies erlaubt es, das Anhängeranschlußgerät auf einfache Weise in bereits betriebsbereiten Fahrzeugen nachzurüsten. Das eigene Gehäuse kann beispielsweise ein Kunststoffgehäuse, ein Stahlblechgehäuse oder dergleichen sein. Es kann beispielsweise Steckverbinder in Form eines Steckers beziehungsweise einer Steckkupplung aufweisen, die es ermöglicht, das Anhängeranschlußgerät auf einfache Weise sowohl mit dem Anhänger als auch mit dem Bordnetz zu verbinden. Natürlich können die Steckverbinder beziehungsweise die Steckkupplung auch über Anschlußleitungen mit dem Anhängeranschlußgerät elektrisch verbunden sein.

Nach einer weiteren Ausgestaltung wird vorgeschlagen, dass das Gehäuse einen Masseanschluß aufweist. Der Masseanschluß erweist sich dahingehend als vorteilhaft, dass die im Gehäuse angeordnete elektronische Schaltung vor elektromagnetischer Störeinwirkung (EMV) geschützt werden kann. Besonders vorteilhaft erweist sich dies bei einem Gehäuse, welches elektrisch leitfähig ist. Vorzugsweise ist das Gehäuse dazu aus einem elektrisch leitfähigen Kunststoff, aus einem Metall oder dergleichen gebildet.

Mit der Erfindung wird ferner ein Verfahren zum Betreiben und Überwachen einer Leuchtdiode eines Anhängers vorgeschlagen, wobei die Leuchtdiode mit einem Anhängeranschlußgerät in elektrischer Verbindung steht und mittels eines Halbleiterschalters ein- und/oder ausgeschaltet wird, der von einer mit einem steuereinrichtungenverbindenden Datennetz des Zugfahrzeuges in kommunikationstechnischer Verbindung stehenden Steuereinrichtung geschaltet wird, wobei ein Strom vom Halbleiterschalter zur Leuchtdiode mittels eines mit einem Stromspiegel gekoppelten, resistiven Elements erfaßt wird.

Die Erfindung erlaubt es, die Leuchtdiode auch im ausgeschalteten Zustand durch eine geeignete Beaufschlagung mit einem Prüfimpuls überwacht kann. Die Kombination des resistiven Elements in Verbindung mit dem Stromspiegel erlaubt es, die Überwachung gezielt angepaßt an die Leuchtdiode durchzuführen.

Um auf unterschiedliche Leuchtdiodencharakteristiken reagieren zu können, wird vorgeschlagen, dass der Stromspiegel eingestellt wird. Dies ermöglicht es, das erfindungsgemäße Verfahren gezielt an eine spezielle Leuchtdiode anzupassen.

Weiterhin kann vorgesehen sein, dass der Stromspiegel temperaturkompensiert wird. Dies ist insbesondere für den üblichen Einsatz des Anhängeranschlußgeräts in einem Fahrzeug zweckmäßig, weil das Anhängeranschlußgerät seine Funktion über einen weiten Temperaturbereich sicher ausführen können soll. Der Temperaturbereich kann sich beispielsweise von -30°C bis +80°C erstrecken. Hierzu kann im Stromspiegel eine entsprechende Stromquelle vorgesehen sein, die den Strom temperaturgesteuert verändert. Dies kann beispielsweise durch einen temperaturempfindlichen Widerstand, einen temperaturempfindlichen Halbleiter oder dergleichen erreicht werden.

Es wird weiterhin vorgeschlagen, daß ein Störungssignal der Leuchtdiode erfaßt und an eine übergeordnete Zugfahrzeugsteuerung übermittelt wird. Diese Ausgestaltung eignet sich insbesondere für Leuchtmittel, die eine eigene Störungsüberwachung enthalten und ein entsprechendes Signal aussenden. Die übergeordnete, zugfahrzeugseitige Steuerung kann dann das Signal erkennen und auswerten und eine entsprechende Meldung veranlassen. Auf diese Weise kann die Flexibilität der Schaltungsanordnung und des Verfahrens weiterverbessert werden.

Gemäß einer weiteren Ausgestaltung wird vorgeschlagen, dass eine am resitiven Element anliegende elektrische Spannung begrenzt wird. Auf diese Weise kann ein empfindlicher Meßeingang des Stromspiegels vor einer Überbeanspruchung geschützt werden. Die Begrenzung kann beispielsweise durch eine Diode, eine Zehnderdiode oder dergleichen erreicht werden.

Gemäß einer Weiterbildung wird mittels des Stromspiegels ein Zustandssignal erzeugt. Das Zustandssignal kann zur weiteren Verarbeitung verwendet werden. So kann das Zustandssignal beispielsweise zur Steuerung des Halbleiterschalters ausgewertet werden. Natürlich kann auch vorgesehen sein, dass das Zustandssignal an eine übergeordnete Steuerung übermittelt wird. In diesem Fall besteht die Möglichkeit, dass beispielsweise im Zugfahrzeug eine entsprechende Meldung angezeigt wird. Weiterhin kann vorgesehen sein, dass das Zustandssignal digitalisiert wird. Das Zustandssignal kann beispielsweise als ein Binärcode oder dergleichen in eine digitale Rechnereinheit eingegeben werden, mit der eine entsprechende Überwachung beziehungsweise Steuerung vorgenommen werden kann. Die Rechnereinheit kann ein Bestandteil des Fahrzeugs sein und gegebenenfalls Meldungen vorgebbar ausgeben.

Es kann ferner vorgesehen sein, dass der Halbleiterschalter mit einem Schaltimpuls beaufschlagt wird. Vorzugsweise wird der Schaltimpuls dann ausgegeben, wenn der Halbleiterschalter bezogen auf seinen bestimmungsgemäßen Betrieb zur Steuerung der Leuchtdiode aufgrund eines Signals der übergeordneten Steuerung des Fahrzeugs ausgeschaltet ist. Auf diese Weise kann ohne zusätzliche Mittel eine Überwachung der Leuchtdiode auch im ausgeschalteten Zustand erreicht werden. Natürlich können auch eine Reihe von Schaltimpulsen nacheinander ausgegeben werden, die ein vorgebbares Schaltmuster bewirken. Die Zuverlässigkeit der Überwachung kann weiter verbessert werden.

Besonders vorteilhaft kann die Einschaltdauer des Halbleiterschalters aufgrund des Schaltimpulses weniger als etwa eine Millisekunde, vorzugsweise weniger als etwa 600 Mikrosekunden, besonders bevorzugt weniger als etwa 350 Mikrosekunden betragen. Bei derart kurzen Einschaltimpulsen kann erreicht werden, dass die Leuchtdiode keine sichtbare Leuchtwirkung erkennen läßt. Vorzugsweise sollte der Schaltimpuls möglichst kurz bemessen sein. Eine untere Grenze findet sich bei den Schalteigenschaften des Halbleiterschalters.

Weiterhin wird vorgeschlagen, dass der Schaltimpuls des Halbleiterschalters mittels eines Kondensators geglättet wird. Diese Glättung verstärkt den Effekt, dass der Schaltimpuls zum Prüfen der Leuchtdiode im ausgeschalteten Zustand nicht zu einer sichtbaren Leuchtwirkung führt. Der Kondensator kann natürlich auch im Bereich der Leuchtdiode im Anhänger angeordnet sein, oder sowohl an der Leuchtdiode im Anhänger als auch im Anhängeranschlußgerät. Vorzugsweise ist der Kondensator hinsichtlich der Kapazität an die relevanten vorgelagerten Schaltungsteile angepaßt, so dass eine optimale Unterdrückung der Leuchtwirkung erzielt werden kann. Hierbei ist insbesondere das Zusammenspiel des resistiven Elements mit dem Kondensator zu beachten. Als Bezugspotential für den Kondensator kann eine Masse, insbesondere eine zugfahrzeugseitige Masse vorgesehen sein. Natürlich kann das Bezugspotential auch eine Betriebsspannung des Zugfahrzeugs oder dergleichen sein.

Weitere Vorteile und Merkmale der Erfindung sind in der folgenden Beschreibung anhand einer Figur zu entnehmen. Diese Figur zeigt in schematischer Darstellung einen Ausschnitt eines elektronischen Prinzipschaltsbilds eines Anhängeranschlußgeräts gemäß der Erfindung.

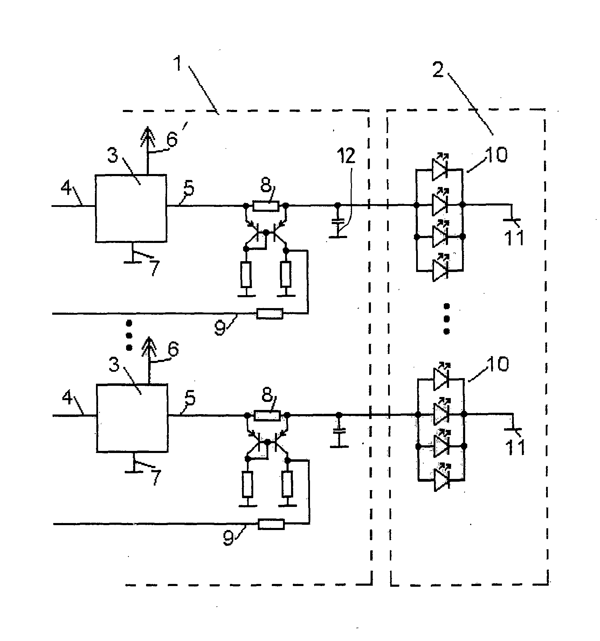

In der Figur ist schematisch ein Ausschnitt eines Anhängeranschlußgeräts 1 dargestellt, dass zum Anschluß mehrerer Leuchtdioden-Anordnungen 10 einer Anhängerleuchte 2 vorgesehen ist. Die Anhängerleuchte 2 ist an einem nicht näher bezeichneten Anhänger angeordnet. In der Figur sind lediglich zwei Kanäle mit zwei Leuchtdioden-Anordnungen 10 dargestellt. Das Anhängeranschlußgerät 1 umfaßt jedoch weitere entsprechende, nicht dargestellte Kanäle für zusätzliche Leuchtdioden-Anordnungen 10. Die Figur ist auf das zur Beschreibung der Erfindung Wesentliche reduziert.

Das Anhängeranschlußgerät 1 weist mehrere, entsprechend der Anzahl der anzusteuernden Leuchtdioden-Anordnungen 10 erforderliche Halbleiterschalterbaugruppen 3 auf, die ihrerseits nicht näher bezeichnete Halbleiterschalter aufweisen. Diese sind jeweils über einen Steuereingang 4 von einer nicht näher bezeichneten Steuereinrichtung des Anhängeranschlußgeräts 1 ein- beziehungsweise ausschaltbar. Vorliegend ist der Halbleiterschalter durch einen MOSFET gebildet. Die Steuereinrichtung steht mit einem CAN-BUS des Zugfahrzeugs in kommunikationstechnischer Verbindung. Mit seinem Drain-Anschluß ist der MOSFET mit einem Anschluß 6 elektrisch leitend verbunden, der seinerseits mit einem nicht näher dargestellten Anschluß des Anhängeranschlußgerätes 1 an die positive Versorgungsspannung verbunden ist. Der Source-Anschluß des MOSFET's ist auf die Steuerleitung 5 für die Anhängerleuchte 2 geschaltet, und zwar für die zugehörige Leuchtdioden-Anordnung 10. Durch ein entsprechendes Steuersignal auf der Steuerleitung 4 kann somit der nicht näher dargestellte MOSFET wie ein mechanischer Schalter einbeziehungsweise ausgeschaltet werden, so dass eine elektrisch leitende Verbindung zwischen dem Anschluß 6 und der Steuerleitung 5 für die entsprechende Leuchtdioden-Anordnung 10 hergestellt werden kann. Die Halbleiterschalterbaugruppe 3 weist ferner einen Masseanschluß 7 auf, der mit einer Zugfahrzeugmasse elektrisch leitend verbunden ist. Weiterhin ist eine Überwachungsleitung 9 vorgesehen, die ebenfalls mit der nicht näher dargestellten Steuereinrichtung des Anhängeranschlußgerätes 1 verbunden ist.

In der vorliegenden Ausgestaltung ist das Anhängeranschlußgerät 1 im nicht näher dargestellten Zugfahrzeug angeordnet. Die Steuerleitungen 5 sind vom Anhängeranschlußgerät 1 auf eine nicht näher bezeichnete Kupplung des Zugfahrzeugs geführt. Über einen ebenfalls nicht näher bezeichneten Stecker des Anhängers sind die Leuchtdioden-Anordnungen 10 elektrisch leitend mit den entsprechenden Steuerleitungen 5 verbunden, wenn der Stecker des Anhängers in die Zugfahrzeugkupplung eingesteckt ist. Über die Steckverbindung zwischen Zugfahrzeug und Anhänger wird eine Massekopplung hergestellt, die in der Figur ebenfalls nicht dargestellt ist.

Anhängerseitig sind die Leuchtdioden-Anordnungen 10 mit ihrem Anodenanschluß jeweils mit dem entsprechenden Anschluß des Anhängersteckers elektrisch leitend verbunden, so dass bei Bestehen der Steckverbindung zwischen Zugfahrzeug und Anhänger die entsprechenden Steuerleitungen 5 kontaktiert werden. Kathodenseitig sind die Leuchtdioden-Anordnungen 10 mit einer Anhängermasse elektrisch leitend verbunden.

Die Leuchtdioden-Anordnung 10 besteht vorliegend aus einer Anzahl parallel geschalteter einzelner Leuchtdioden, im vorliegenden Fall jeweils vier. Natürlich sind auch andere Schaltungen denkbar, bei denen die Leuchtdioden in Reihe geschaltet sein können. Weiterhin kommen auch Matrixschaltungen in Frage, die sowohl parallel geschaltete als auch seriell geschaltete Leuchtdioden aufweisen.

Gemäß der Erfindung ist in der Steuerleitung 5 zwischen der Halbleiterbaugruppe 3 und der Leuchtdioden-Anordnung 10 ein Stromspiegel 8 geschaltet, wobei ein elektrischer Widerstand als resistives Element zwischen den beiden Emittoren der Transistoren der Stromspiegels geschaltet ist. Dieser wird vom Strom der Leuchtdiodenanordnung 10 durchströmt.

Der Stromspiegel 8 ist ferner mit einer Überwachungsleitung 9 elektrisch leitend verbunden, die ein Signal entsprechend des Stromes durch den Widerstand des Stromspiegels 8 ausgibt.

Erfolgt nun eine Spannungsbeaufschlagung der Steuerleitung 5 durch den MOSFET, so fließt ein Strom vom MOSFET durch den Widerstand des Stromspiegels 8 zur Leuchtdiodenanordnung 10. Entsprechend des Stromflusses wird eine Steuerspannung auf der Überwachungsleitung 9 ausgegeben. Auf diese Weise erzeugt der Stromspiegel 8 auf der Überwachungsleitung 9 ein Zustandssignal. Dieses kann durch die Steuereinrichtung weiter ausgewertet werden, so dass diese ermitteln kann, ob die Leuchtdioden-Anordnung 10 ordnungsgemäß funktioniert. Die elektrische Spannung an der Überwachungsleitung 9 stellt sich proportional zum Strom durch den Widerstand des Stromspielgels 8 ein. Auf diese Weise kann sowohl eine Unterbrechung der elektrischen Verbindung zwischen dem Anhängeranschlußgerät 1 und der Anhängerleuchte 2 als auch ein Defekt einzelner Leuchtdioden der Leuchtdiodenanordnung 10 ermittelt werden. Ebenfalls kann ein Kurzschluß beziehungsweise ein Überstrom ermittelt werden, indem das Einhalten entsprechender Schwellwerte überwacht wird. Mit der Schaltung ist es deshalb möglich, die Leuchtdioden-Anordnung im eingeschalteten Zustand hinsichtlich ihrer vorgesehenen Funktion zu überwachen.

Damit im Falle eines Kurzschlusses der Leuchtdiodenanordnung 10 der MOSFET der Halbleiterschalterbaugruppe 3 nicht beschädigt wird, wird die elektrische Spannung am MOSFET im eingeschalteten Zustand gemessen. Bekanntermaßen verhält sich der MOSFET in diesem Betriebszustand wie ein niederohmiger Widerstand, so dass der Spannungsabfall ein Maß für den Strom durch den Transistor ist. Eine Überwachungsschaltung erfaßt diese Spannung und vergleicht diese mit einem Schwellwert. Wird der Schwellwert von der erfaßten Spannung überschritten, so wird dies als Überstrom detektiert und der MOSFET ausgeschaltet. Eingeschaltet werden kann der MOSFET lediglich dadurch, dass von der übergeordneten Steuerung des Zugfahrzeugs ein erneuter Einschaltbefehl gesendet wird, der über die Steuerleitung 4 der Halbleiterschalterbaugruppe 3 zugeführt wird.

Im Bereich des MOSFET's ist ferner ein NTC-Widerstand angeordnet, mit dem die Temperatur des MOSFET's erfaßt wird. Überschreitet die Temperatur einen vorgebbaren Schwellwert so wird der MOSFET ebenfalls ausgeschaltet. In diesem Fall erfolgt eine Meldung über eine nicht näher dargestellte Kommunikationsleitung an die übergeordnete Steuerung des Zugfahrzeugs.

Um den Zustand der Leuchtdioden-Anordnung 10 auch im ausgeschalteten Zustand überwachen zu können, ist ferner vorgesehen, dass ein kurzer Einschaltimpuls durch den MOSFET erzeugt wird, der auf die Steuerleitung 5 geschaltet wird. Die Impulsbreite des Einschaltimpulses beträgt vorliegend etwa 0,3 µs. Der Widerstand des Stromspiegels 8 in Verbindung mit einem Kondensator 12 glättet den Schaltimpuls, der sich als Spannungsimpuls auf der Steuerleitung 5 darstellt, so dass es durch die Leuchtdioden-Anordnung 10 zu keinem sichtbaren Aufleuchten kommt. Der Kondensator 12 ist einerseits mit einem Anschluß an der Steuerleitung 5 elektrisch angekoppelt, und zwar derart, dass der Widerstand des Stromspiegels 8 zusammen mit dem Kondensator 12 einen Tiefpaß bildet. Andererseits ist der Kondensator 12 mit seinem zweiten Anschluß gegen die Masse 7 geschaltet. Der Kondensator 12 bewirkt eine Glättung, so dass der kurze Schaltimpuls, auch als Einschaltimpuls bezeichnet, hinsichtlich seiner elektrischen Parameter auf ein Maß reduziert wird, so dass die Leuchtdioden-Anordnung 10 keine sichtbare Leuchtwirkung erzeugt. Der Strom wird vor dem Kondensator 12 mit dem Stromspiegel 8 gemessen und ein entsprechendes Signal auf die Überwachungsleitung 9 gegeben. Auf diese Weise kann die Leuchtdiodenanordnung 10 also auch im ausgeschalteten Zustand geprüft werden.

Auch wenn das in der Figur nicht dargestellt ist, sind natürlich Masseverbindungen zwischen dem Anhängeranschlußgerät beziehungsweise der Zugfahrzeugmasse und dem Anhänger selbst vorgesehen, so dass ein geschlossener Stromkreis gebildet werden kann.

Natürlich können mit der Erfindung auch Kontaktstörungen an den Verbindungsstellen und dergleichen überwacht werden.

Das in der Figur dargestellte Ausführungsbeispiel dient lediglich der Erläuterung der Erfindung und ist für diese nicht beschränkend. So können natürlich einzelne Bauelemente bedarfsweise variiert werden, um eine entsprechende Anpassung erreichen zu können. Auch zusätzliche Funktionen können vorgesehen sein, so beispielsweise eine Begrenzung des Spannungsabfalls über dem Stromspiegel 8. Eine solche Begrenzung kann beispielsweise mittels Zener-Dioden oder dergleichen erfolgen.

### Bezugszeichenliste

- 1: Anhängeranschlußgerät
- 2: Anhängerleuchte
- 3: Halbleiterschalterbaugruppe
- 4: Steuereingang
- 5: Steuerleitung für Anhängerleuchte
- 6: Anschluß an positive Versorgungsspannung
- 7: Masse
- 8: Stromspiegel
- 9: Überwachungsleitung
- 10: LED-Anordnung
- 11: Anhängermasse
- 12: Kondensator

## Patentansprüche

1. Anhängeranschlußgerät für einen Fahrzeugzug mit einem Zugfahrzeug und einem Anhänger, mit einem für eine Ansteuerung einer Leuchtdiode des Anhängers geeigneten Halbleiterschalter, der mittels einer Steuereinrichtung schaltbar ist, wobei die Steuereinrichtung mit einem steuereinrichtungenverbindenden Datennetz des Zugfahrzeugs in kommunikationstechnischer Verbindung steht,
**gekennzeichnet durch**
ein resistives Element in der elektrischen Verbindung zwischen dem Halbleiterschalter und der Leuchtdiode, welches elektrisch mit einem Stromspiegel gekoppelt ist.

2. Gerät nach Anspruch 1, **dadurch gekennzeichnet, daß** mittels des Stromspiegels ein Zustandssignal erzeugbar ist.

3. Gerät nach Anspruch 1 oder 2, **dadurch gekennzeichnet, daß** das Zustandssignal an eine übergeordnete Steuereinrichtung des Fahrzeugs übermittelbar ist.

4. Gerät nach einem der Ansprüche 1 bis 3, **gekennzeichnet durch** einen Pegelumsetzer für das Zustandssignal.

5. Gerät nach einem der Ansprüche 1 bis 4, **gekennzeichnet durch** eine Auswerteeinheit für das Zustandssignal.

6. Gerät nach einem der Ansprüche 1 bis 5, **dadurch gekennzeichnet, daß** mittels der Steuereinrichtung Impulse für das Schaltelement erzeugbar sind.

7. Gerät nach Anspruch 6, **dadurch gekennzeichnet, daß** mittels der Steuereinrichtung Impulse nur dann erzeugbar sind, wenn das Schaltelement durch die übergeordnete Steuerung ausgeschaltet ist.

8. Gerät nach einem der Ansprüche 1 bis 7, **dadurch gekennzeichnet, daß** die elektrische Verbindung zwischen dem Gerät und der Leuchtdiode mittels eines mit einem Bezugspotential verbundenen Kondensators gepuffert ist.

9. Gerät nach Anspruch 8, **dadurch gekennzeichnet, daß** der Kondensator im Gerät und/oder im Bereich der Leuchtdiode angeordnet ist.

10. Gerät nach einem der Ansprüche 1 bis 9, **gekennzeichnet durch** ein eigenes Gehäuse.

11. Verfahren zum Betreiben und Überwachen einer Leuchtdiode eines Anhängers, wobei die Leuchtdiode mit einem Anhängeranschlußgerät in elektrischer Verbindung steht und mittels eines Halbleiterschalters ein- und/oder ausgeschaltet wird, der von einer mit einem steuereinrichtungenverbindenden Datennetz des Zugfahrzeuges in kommunikationstechnischer Verbindung stehenden Steuereinrichtung geschaltet wird, wobei ein Strom vom Halbleiterschalter zur Leuchtdiode mittels eines mit einem Stromspiegel gekoppelten, resistiven Elements erfaßt wird.

12. Verfahren nach Anspruch 11, **dadurch gekennzeichnet, daß** der Stromspiegel eingestellt wird.

13. Verfahren nach Anspruch 11 oder 12, **dadurch gekennzeichnet, daß** ein Störungssignal der Leuchtdiode erfaßt und an eine übergeordnete Zugfahrzeugsteuerung übermittelt wird.

14. Verfahren nach einem der Ansprüche 11 bis 13, **dadurch gekennzeichnet, daß** eine am resistiven Element anliegende elektrische Spannung begrenzt wird.

15. Verfahren nach einem der Ansprüche 11 bis 14, **dadurch gekennzeichnet, daß** mittels des Stromspiegels ein Zustandssignal erzeugt wird.
